Europäisches Patentamt

European Patent Office

Office européen des brevets

(19)

(11) EP 0 486 152 B1

(12) EUROPEAN PATENT SPECIFICATION

(45) Date of publication and mention
of the grant of the patent:
**21.02.1996 Bulletin 1996/08**

(51) Int Cl.[6]: **H01S 3/03**, H01S 3/086,
H01S 3/038, H01S 3/041,
H01S 3/0971, H01S 3/0975,
B23K 26/00, A61B 17/36

(21) Application number: 91309288.8

(22) Date of filing: **09.10.1991**

(54) **Gas slab laser**

Scheibenförmiger Gaslaser

Laser à gaz en forme de tranche

(84) Designated Contracting States:
**CH DE FR GB IT LI**

(30) Priority: **01.11.1990 US 607910**
**12.10.1990 US 596463**
**12.10.1990 US 596788**
**12.10.1990 US 596672**
**12.10.1990 US 597382**
**12.10.1990 US 596532**

(43) Date of publication of application:
**20.05.1992 Bulletin 1992/21**

(73) Proprietor: **COHERENT, INC.**
**Santa Clara, CA 95056 (US)**

(72) Inventors:
• **Hobart, James L.**
**Los Altos Hills, California 94022 (US)**
• **Dallarosa, Joseph**
**Redwood City, California 94062 (US)**
• **Gardner, Phillip**
**Cupertino, California 95615 (US)**

• **Mefferd, Wayne S.**
**Los Altos Hills, California 94022 (US)**
• **Yarborough, Michael J.**
**Tucson, Arizona 85718 (US)**

(74) Representative: **Jackson, David Spence et al**
**London, WC1X 8PL (GB)**

(56) References cited:
**EP-A- 0 412 555            US-A- 4 719 639**

• **APPLIED OPTICS, vol. 12, no. 1, January 1973,
pages 29-33; P. KAFALAS et al.: "Fog droplet
vaporization and fragmentation by a 10.6-mum
laser pulse"**
• **KUNSTSTOFFE, BEIBLATT LASER-PRAXIS,
vol. 79, no. 6, June 1989, pages L31-L35; Carl
Hanser Verlag, Munich, DE; F. BACHMANN et
al.: "Bohren von Leiterplatten mit
Excimerlasern"**
• **IEEE JOURNAL OF QUANTUM ELECTRONICS,
vol. QE-22, no. 7, July 1986, pages 1088- 1094;
E. SKLAR: "The advantages of a negative
branch unstable resonator for use with
free-electron lasers"**

## Description

This invention relates to a slab laser of the kind comprising:

a pair of elongate, spaced apart electrodes having opposed, planar, light reflecting surfaces;
a laser gas disposed between said electrodes;
means for exciting said laser gas to create a gas discharge; and
a pair of spherical mirrors with the configuration of said mirrors being selected such that a stable waveguide resonant cavity is defined in a plane perpendicular to said light reflecting surfaces, and an unstable resonator is defined in a plane parallel to said light reflecting surfaces.

Background of the Invention

There has been considerable investigation into various forms of waveguide and slab $CO_2$ lasers. (See, "The Waveguide Laser: A Review," Applied Physics, Vol. 11, pages 1-33 (1976)) A waveguide laser differs from a conventional laser in that the circulating light is guided over some portion of the propagation path and does not obey the laws of free space propagation. The term slab has been used to describe lasers having a rectangular discharge region defined between two planar surfaces. With respect to the subject invention, the term slab waveguide laser will be used to describe a laser having a rectangular discharge region defined between two narrowly spaced electrodes wherein light is guided in the narrow dimension between the electrodes yet is allowed to propagate in free space in the wider dimension.

The initial work in slab waveguide $CO_2$ lasers was directed to flowing gas systems where the gas was excited with a DC discharge. (See, for example, "Optical-gain Measurements in a CW Transverse-discharge, Transverse-gasflow $CO_2$:$N_2$:He Planar-Waveguide Laser," McMullen et al., Journal of Applied Physics, Vol. 45, No. 11, Nov. 1974, pg. 5084) Efforts to extend the DC excitation approach to sealed $CO_2$ lasers were not particularly successful.

The first satisfactory excitation scheme for a sealed $CO_2$ waveguide laser is described in United States Patent No. 4,169,251, issued September 25, 1979 to Laakmann. The laser disclosed in this patent is transversely excited by a high frequency RF drive. The discharge region is defined between a pair of spaced apart, elongated electrodes. The Laakmann patent teaches how to select the proper RF excitation frequency based upon the spacing between the electrodes. Excitation with the proper RF frequency is necessary to maintain a stable discharge.

The electrodes of the laser disclosed in the Laakmann patent are spaced apart by a pair of elongated dielectric members. The combination of the electrodes and dielectric members can be used to define both square and rectangular discharge regions. In the embodiment illustrated in the patent, the spacing between the dielectric members is narrow enough so that light is guided in both dimensions, that is, between the electrodes and the dielectric members.

In a effort to increase the power which can be generated for a given length of electrodes, the teachings in the Laakmann patent have been applied to the development of $CO_2$ slab waveguide lasers, wherein the light is guided only between the narrowly spaced electrodes and is allowed to propagate freely in the wider dimension. One of the earliest reports on this type of laser can be found in "Radio-frequency Excited Stripline CO and $CO_2$ lasers," Gabai, Hertzberg and Yatsiv, Abstract presented at Conference on Lasers and Electro-optics, June 1984. In this laser, a pair of spaced apart water-cooled X-band waveguide electrodes were excited with an RF discharge at frequencies ranging from 25 to 50 MHz. The spacing between the electrodes was on the order of 4.5mm, which was suitable for guiding light. The wider dimension of the electrodes was 2.5cm which allowed the light to freely propagate. Cavity experiments were performed with plane mirrors and a stable resonator. Additional information can be found in a subsequent paper by Yatsiv, entitled "Conductively Cooled Capacitively Coupled RF Excited $CO_2$ Lasers," given at the Gas Flow & Chemical Lasers Conference, 1986 and published by Springer Proceedings, 6th Int. Sym, pages 252-257, 1987.

Another $CO_2$ slab waveguide laser, which is of the kind defined hereinbefore at the beginning, is described in U.S. Patent No. 4,719,636, issued January 12, 1988 to Tulip. Similar to the device described in the Gabai paper, the discharge region in the Tulip device is rectangular and configured to guide light between the electrodes while allowing the light to propagate in free space in the wider dimension. The Tulip patent also discloses that for a slab laser, it can be desirable to use an unstable resonator structure in the non-waveguide direction. The unstable resonator described in Tulip includes one concave mirror and one convex mirror and is known in the art as a positive branch unstable resonator.

Still another slab waveguide laser is described in "$CO_2$ Large-area Discharge Laser Using an Unstable-waveguide Hybrid Resonator," Jackson et al., Applied Physics Letters, Vol. 54, No. 20, page 1950, May 1989. As in the laser described in the Tulip patent, the laser of this latter article was provided with a positive branch unstable resonator in the nonwaveguide direction.

Still another slab waveguide laser is disclosed in U.S. Patent No. 4,939,738, issued July 3, 1990 to Opower. This slab waveguide laser is also provided with a positive branch unstable resonator.

In an article entitled "Development of $CO_2$ laser excited by 2.45GHz microwave discharge", at pages 340 to 348 of the Proceedings of SPIE, Volume 1225, 1990, J. Nishimae and K. Yoshizawa describe a hybrid waveguide laser having a negative branch unstable resonator consisting of two enhanced silver-coated silicon mirrors of radii of curvature $R_1$ and $R_2$ arranged confocally so that the mirror spacing is half the sum of $R_1$ and $R_2$. An antireflective coated ZnSe flat window seals the discharge volume from ambient air. The laser waveguide resonator is formed between a shallow rectangular section groove in a first aluminium block and a ceramic cover plate held against the first aluminium block by a second aluminium block that is in electrical contact with the first aluminium block. Microwave power passes from a parallel adjacent microwave waveguide to the laser waveguide resonator through a longitudinal slit and the ceramic plate. The confocal mirrors are mounted close to the ends of the laser waveguide resonator, the mirror spacing being 434mm and the active length being 400mm.

Many of the initial $CO_2$ slab waveguide laser designs reported in the prior literature while showing promise, have not been suitable for commercial exploitation. More particularly, most of the lasers described were essentially for experimental purposes and little effort was expended to overcome problems faced when attempting to operate the lasers at high power levels for extended periods of time. For example, in order to provide a commercially acceptable laser, various design issues must be addressed including mirror assemblies, cooling systems and electrode support structures.

Another problem with the prior art slab lasers is that their resonator structures included mirrors which were located quite close to the discharge and therefore subject to rapid degradation. This resonator construction followed the conventional wisdom of waveguide laser design which specifies the optimum placement and radius of the resonator mirrors. More specifically, prior art theory specified that the mirrors should either be located very close to the ends of the waveguide elements or spaced a large distance away. By placing the mirrors close to the end of the waveguide, it was felt that all of the light could be forced back into the waveguide channel. A cavity design where the mirrors are placed close to the end of the waveguide was said to have a Type I resonator. Mirrors used in a Type I resonator were typically flat, or had a very large radius of curvature. While a Type I resonator is fine for experimentation, degradation of the mirrors due to exposure to the nearby discharge renders this approach unsuitable for commercial applications.

The prior art waveguide theory also specified that there would be two additional locations, spaced far from the end of the waveguide, where mirrors could be placed and losses could still be minimized. These locations were a function of the separation between the electrodes and for convenience were labelled R and R/2. If the mirrors were placed at a distance R from the end of the waveguide, the resonator was called a Type II. If the mirrors were located at the distance R/2, the resonator was called as Type III. The radius of curvature of the mirrors in both a Type II and Type III resonators is equal to R. The distance R in a typical waveguide configuration turns out to range from about 10cm to one meter. This additional spacing of both mirrors away from the ends of the waveguide is unacceptable in a commercial laser design since it would add additional space to the laser package and create potential alignment stability problems.

According to the present invention, a slab laser of the kind defined hereinbefore at the beginning is characterised in that the spherical mirrors are concave and the unstable resonator is a negative branch unstable resonator, and in that the lengths of the electrodes are such that, at each mirror location, the radius of curvature of the wavefront of the laser beam in relation to an axis extending between said light reflecting surfaces, substantially matches the radius of curvature of the respective mirror.

Preferred embodiments of the invention include or provide a new and improved $CO_2$ slab waveguide laser;

a $CO_2$ slab waveguide laser which is stable and generates a high power output for a given length;

a $CO_2$ slab waveguide laser having an improved resonator structure;

a $CO_2$ slab waveguide laser having a negative branch unstable resonator in the nonwaveguide direction;

a $CO_2$ slab waveguide laser having the resonator mirrors spaced away from the ends of the guide to reduce degradation;

a $CO_2$ slab waveguide laser having the resonator mirror spacing governed by the geometry of the negative branch unstable resonator;

a $CO_2$ slab waveguide laser having an improved electrode support structure;

a $CO_2$ slab waveguide laser having an electrode support structure which allows for thermal expansion of the electrodes;

a $CO_2$ slab waveguide laser having an electrode support structure which does not confine the discharge;

a $CO_2$ slab waveguide laser having an improved system for cooling the electrodes;

a $CO_2$ slab waveguide laser having improved mirror mounts which allow adjustment from outside the sealed laser housing;

a means for preionizing the discharge to facilitate operation;

a laser for generating short, high energy pulses suitable for treating tissue;

an RF excited $CO_2$ slab waveguide laser which can generate short, high power pulses suitable for treating tissue.

A preferred embodiment of the invention takes the form of a $CO_2$ slab waveguide laser with a number of features designed to enhance performance. The slab laser consists of a pair of spaced apart, planar electrodes having opposed light reflecting surfaces. The spacing of the electrodes is arranged such that light will be guided in a plane perpendicular

EP 0 486 152 B1

to the reflecting surfaces. In contrast, the light in the plane parallel to the light reflecting surfaces is allowed to propagate in free space and is only confined by the resonator.

A new resonator structure is used to provide added stability and improved mode quality. More specifically, a negative branch unstable resonator structure is selected for reflecting light in the nonwaveguide dimension. While negative branch unstable resonators have been used in other lasers, it does not appear that this structure has been used with a $CO_2$ slab waveguide laser. It is believed that prior investigators incorrectly assumed that a negative branch unstable resonator would substantially reduce power output from such a laser. It has been found that the negative branch unstable resonator can be used without a significant reduction in power.

Another feature of the novel resonator design is that the mirrors are spaced a sufficient distance from the ends of the waveguide to reduce degradation problems. This mirror spacing does not follow prior art teachings for waveguide structures. More specifically, the mirrors are spaced from the ends of the guide a distance significantly greater than in a Type I resonator. In addition, the mirrors are also much closer to the end of the guide than in either a Type II or Type III resonator.

The mirror separation and curvature is initially selected based on the desired optical output coupling of the negative branch unstable portion of the resonator. Since, spherical mirrors are used, they minimize costs, and the radius of curvature of the mirrors in both the waveguide and nonwaveguide dimensions will be the same.

Once the mirror separation and curvature are selected for the nonwaveguide dimension, the length of the waveguide is selected so that the spacing between the ends of the guide and mirrors optimizes reflection of the light back into the guide.

This optimization is achieved by setting the length of the guide so that the radius of curvature of the wavefront of the laser beam at the mirror location matches the selected radius of curvature of the mirrors. It has been found that this approach maximizes power output even though prior theory would indicate that losses of roughly fifteen percent would occur.

Another important feature of the subject laser resides in the support structure used to maintain the separation of the electrodes. More specifically, in the prior art, the separation of the electrodes was achieved by mounting a pair of elongated dielectric blocks between the electrodes. This approach provided the necessary electrical isolation between the electrodes. However, the dielectric blocks tend to sharply define the edge of the discharge.

In contrast, in the preferred embodiment, the means for supporting and isolating the electrodes is spaced from the discharge. In this manner, the discharge is not sharply limited but presents an apodized or gentle edge. It is believed that this configuration contributes to the superior mode performance of the laser. Another advantage to this configuration is that it allows the hot, dissociated laser gas to flow freely out of the space between the electrodes while allowing cooler gas to enter and replenish the discharge.

In another aspect of the electrode support structure, consideration is given to accommodating the thermal expansion of the electrodes during operation. Accordingly, one end of an electrode is fixedly attached to one end of the housing. The other end of the electrode is slidably mounted to the other end of the housing to allow movement caused by thermal expansion.

The preferred embodiment also includes an improved cooling system. As can be appreciated, as a laser is run at higher powers, cooling becomes more important. In the past, cooling pipes were simply attached to the surface of the electrodes. In the subject design, the cooling pipes are located in channels formed into the electrodes. Moreover, the specific location of the channels is designed to minimize stresses created due to differences in the coefficient of thermal expansion between the material 'of the pipes and the electrodes. The cooling pipes are also designed to minimize shorting between the high voltage electrode and grounded laser housing.

Another feature of the subject laser is an improved mirror assembly. This mirror assembly allows the angle of the resonator mirrors to be adjusted from outside of the housing without any need for sliding vacuum seals.

Another feature of the subject laser is the inclusion of a low pressure mercury-argon lamp used to preionize the discharge. The lamp allows the laser to start reliably even at low operating currents.

The subject laser is capable of generating short, high energy pulses which are particularly suitable for treating tissue.

The invention will hew be described by way of example with reference to the accompanying drawings, in which:

Brief Description of the Drawings

Figure 1 is a perspective view, partially in section, of a $CO_2$ slab waveguide laser embodying the invention.
Figure 2 is an exploded perspective view of the $CO_2$ slab waveguide laser of Figure 1.
Figure 3 is a cross sectional view of the $CO_2$ slab waveguide laser taken along the lines 3-3 of Figure 1.
Figure 4 is a cross sectional view of the $CO_2$ slab waveguide laser taken along the lines 4-4 of Figure 3.
Figure 5 is a cross sectional view of the $CO_2$ slab waveguide laser taken along the lines 5-5 of Figure 1.
Figure 6 is a cross sectional view of the $CO_2$ slab waveguide laser taken along the lines 6-6 of Figure 5.
Figure 7 is an exploded view of a portion of the novel electrode support system of the $CO_2$ slab waveguide laser of

4

Figure 1.

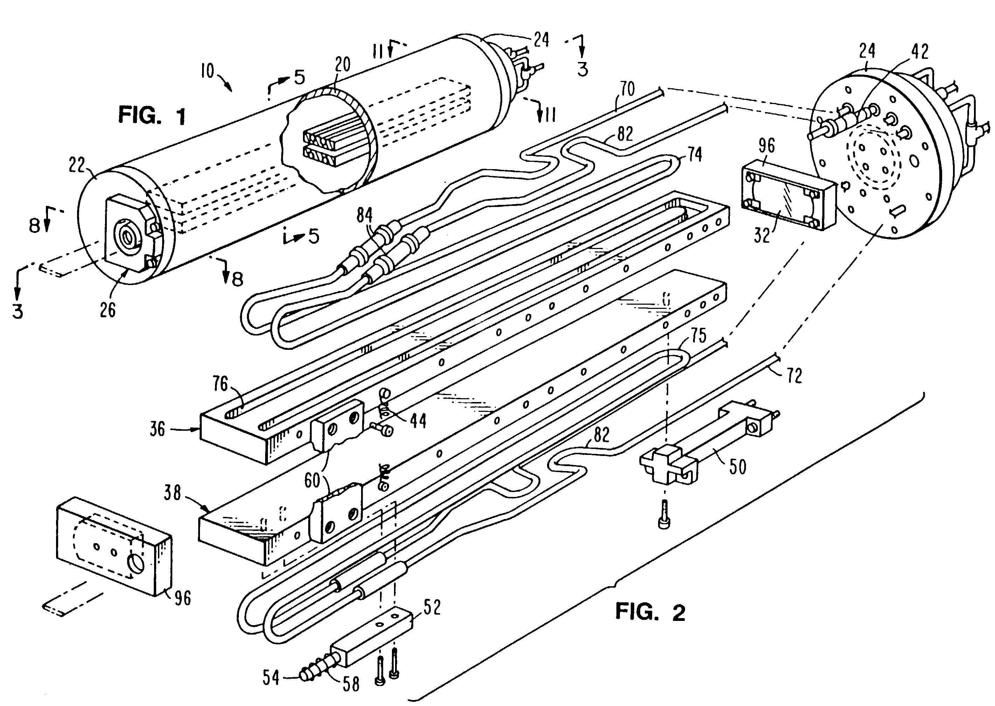

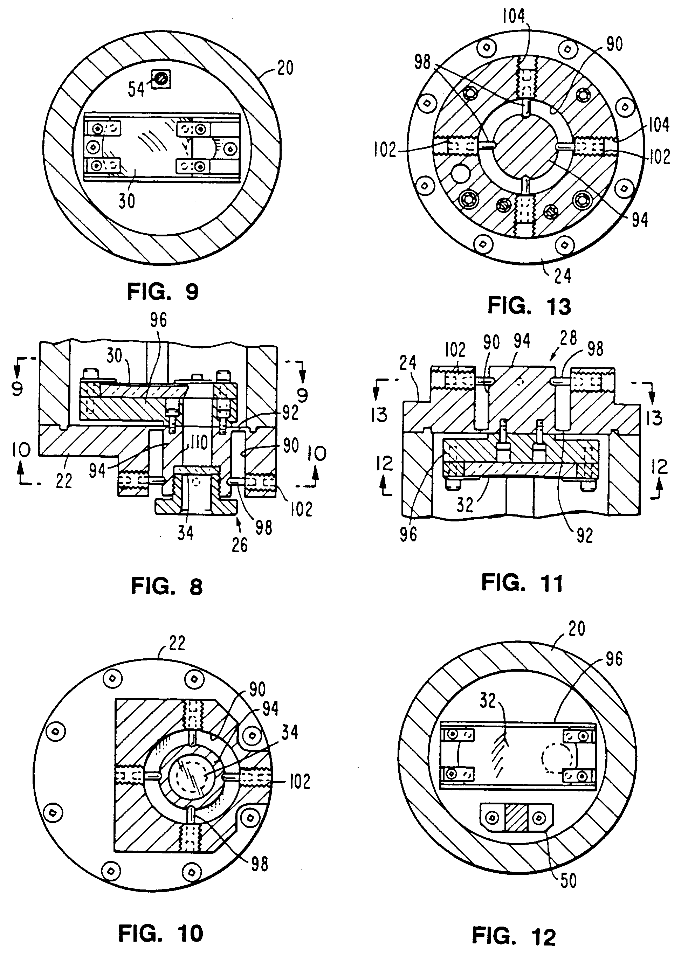

Figure 8 is a cross sectional view of the mirror mount and output window of the laser taken along the lines 8-8 of Figure 1.

Figure 9 is a cross sectional view of the mirror mount of the laser taken along the lines 9-9 of Figure 8.

Figure 10 is a cross sectional view of the mirror mount and output window of the laser taken along the lines 10-10 of Figure 8.

Figure 11 is a cross sectional view of the other mirror mount of the laser taken along the lines 11-11 of Figure 1.

Figure 12 is a cross sectional view of the mirror mount of the laser taken along the lines 12-12 of Figure 11.

Figure 13 is a cross sectional view of the mirror mount of the laser taken along the lines 13-13 of Figure 11.

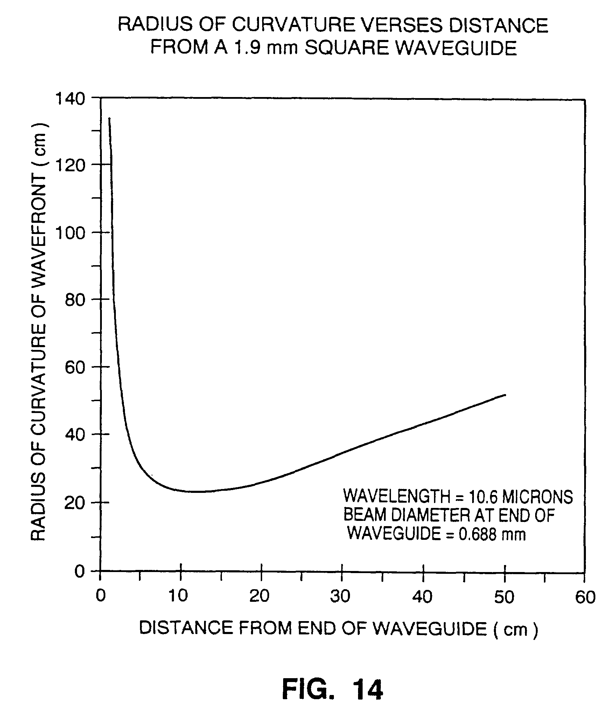

Figure 14 is a plot of the radius of the wavefront as a function of the its distance from the end of the waveguide.

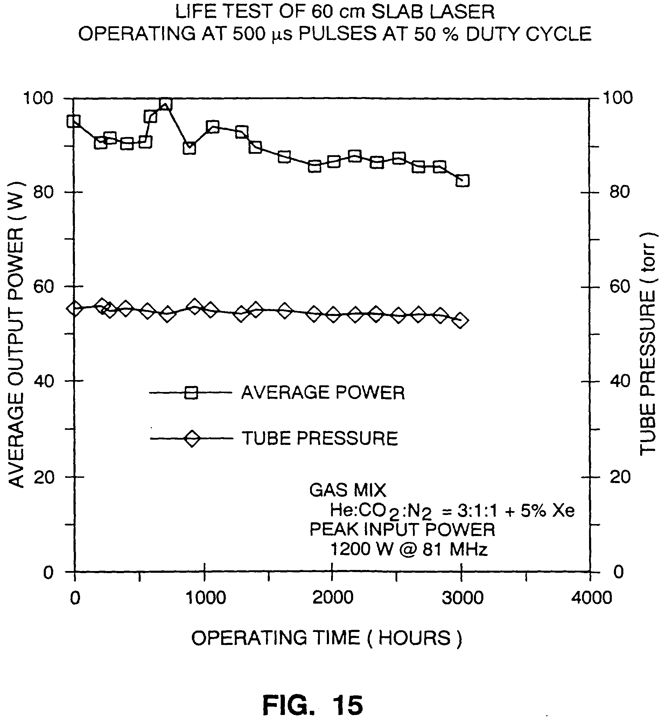

Figure 15 is a plot of the average output power over time of a laser constructed in accordance with the subject invention.

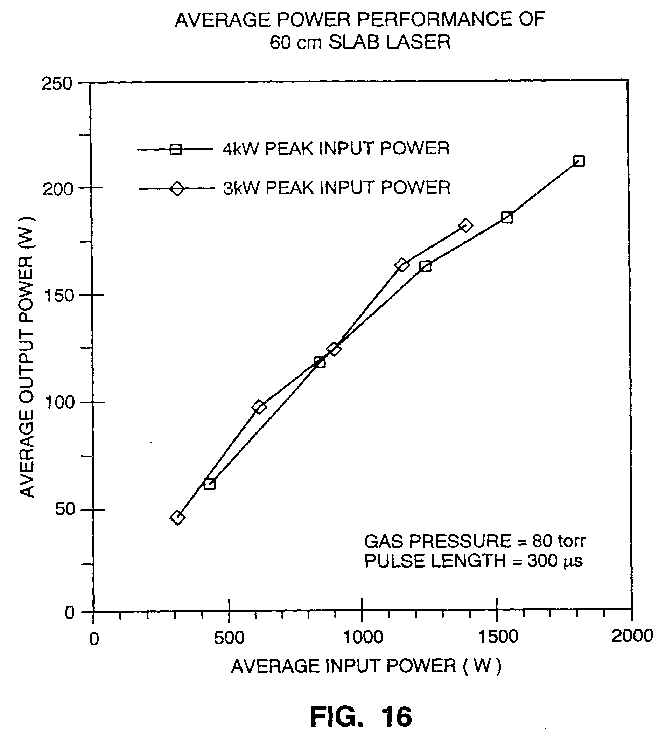

Figure 16 is a plot of the average output power as a function of RF input power of a laser constructed in accordance with the subject invention.

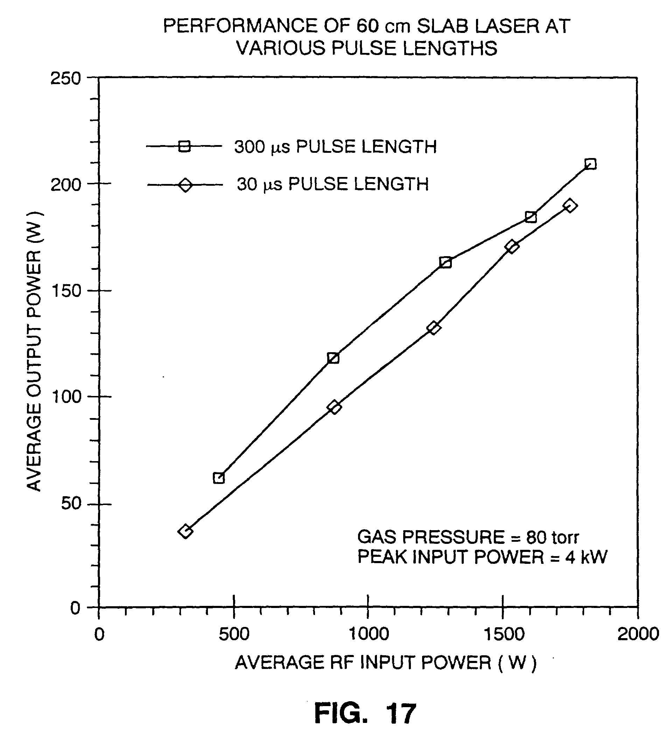

Figure 17 is a plot similar to Figure 16 showing the effects of different pulse lengths.

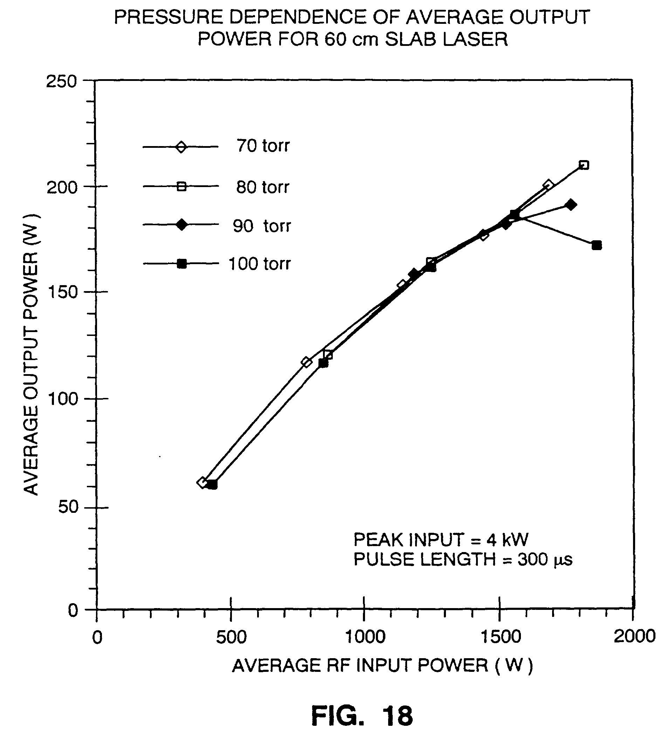

Figure 18 is a plot similar to Figure 16 showing the effects of different gas pressures within the laser.

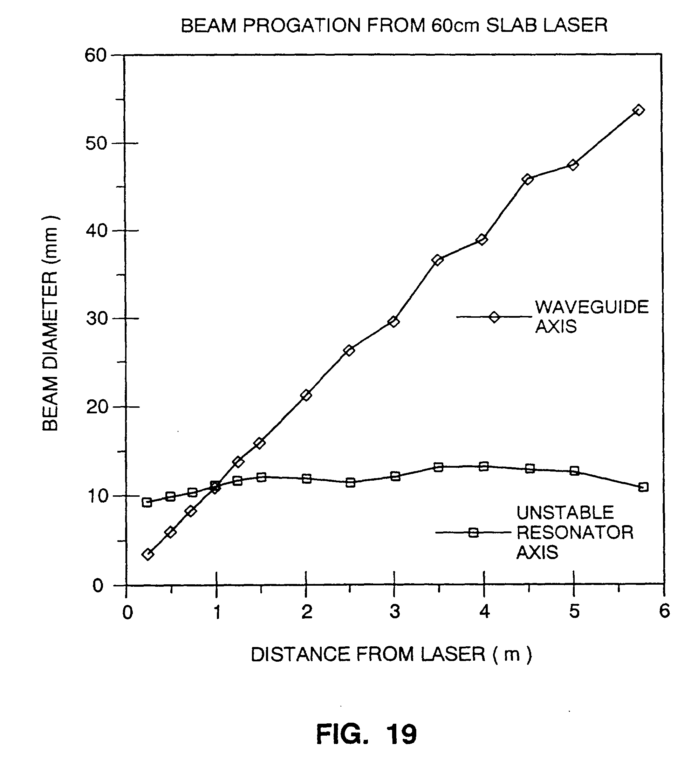

Figure 19 is a plot illustrating the change in beam diameter as it propagates away from the end of a laser constructed in accordance with the subject invention.

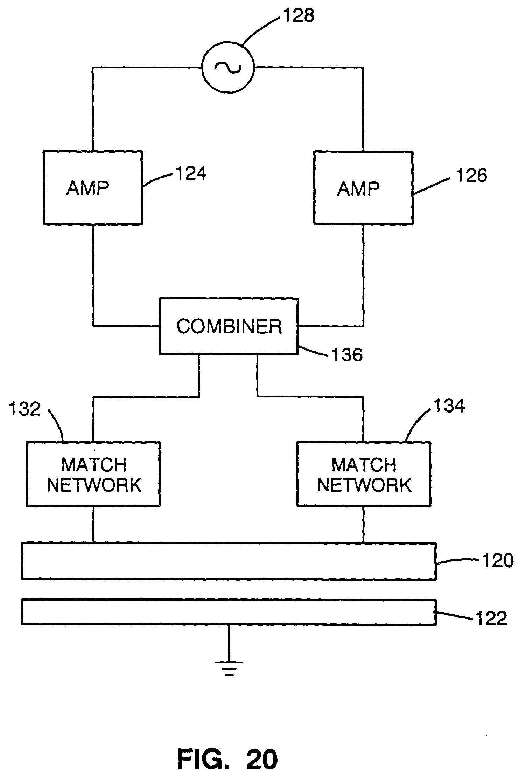

Figure 20 is a schematic diagram illustrating the coupling of the RF excitation energy to multiple points on the hot electrode.

Detailed Description of the Preferred Embodiment

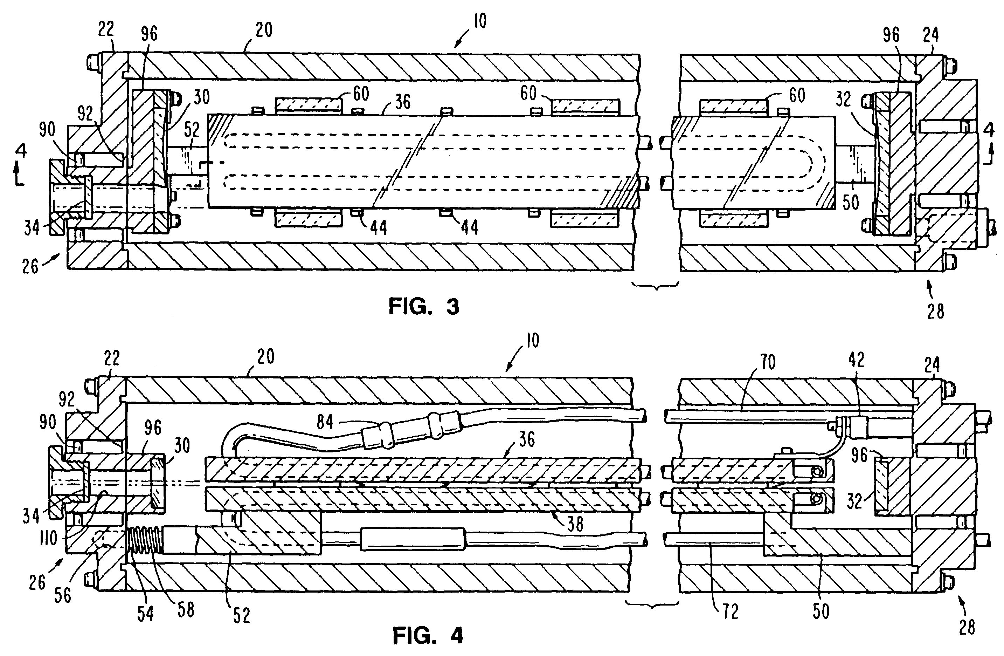

Turning to Figures 1 through 5, there is illustrated a $CO_2$ slab waveguide laser 10 embodying the subject invention. The major parts of the laser 10 include a cylindrical aluminum housing 20 which is vacuum sealed by a pair of end plates 22 and 24. The end plates include the adjustable mirror mount assemblies shown generally as 26 and 28. The mirror mount assemblies support resonator mirrors 30 and 32. As seen in Figure 3, mirror 30 is shorter than mirror 32 for coupling light out of the cavity. Mirror assembly 26 also supports a window 34 for transmitting the light passing by the end of mirror 30 out of the housing.

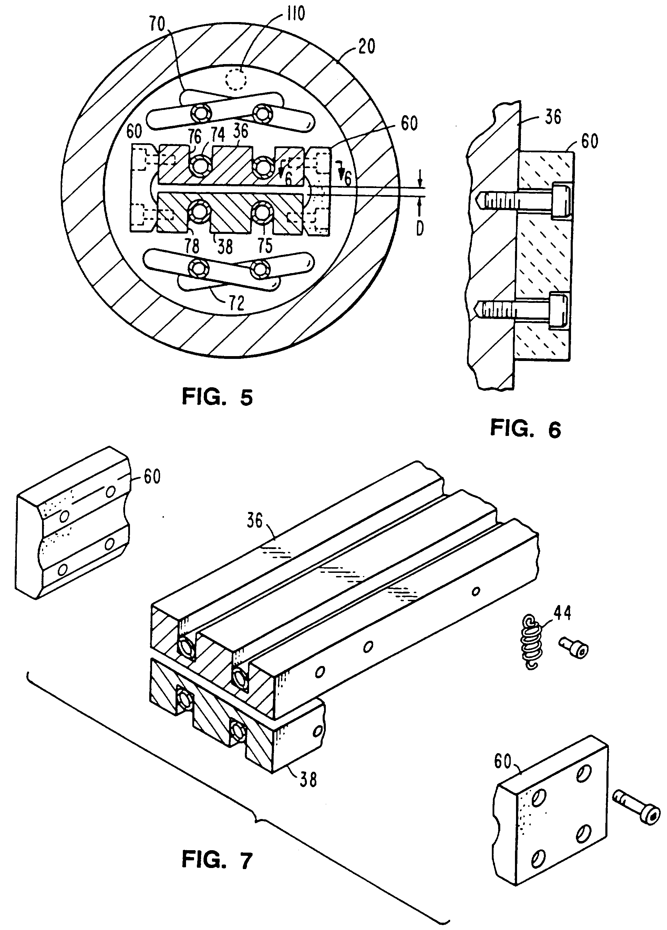

Within the housing 20 there are mounted a pair of planar aluminum upper and lower electrodes 36 and 38. The spacing D (Figure 5) between the electrodes is selected such that light will be guided between the opposed, inner surfaces of the electrodes. In the preferred embodiment, the spacing D is equal to 2mm. In the subject design, there are no confining elements in planes perpendicular to the light reflecting surfaces such that laser light is free to propagate in free space controlled only by the resonator mirrors 30 and 32.

To minimize losses, the inner light reflecting surfaces of the electrodes are machined flat to be within .002 inches (1 inch = 2.54 cm). In addition, the surface finish is smooth to within 32 rms microinches. In the illustrated embodiment, each electrode is 44mm wide, 12mm thick and 61.52cm long.

In the preferred embodiment, the lasing medium is standard $CO_2$ lasing mixture for generating radiation at a principal wavelength of 10.6 microns. The mixture includes helium, nitrogen and carbon dioxide with a 3:1:1 ratio plus the addition of five per cent xenon. The gas is maintained between 50 and 110 torr and preferably on the order of about 80 torr (1 Torr = 133.32 Pascal). The gas is electrically excited by coupling a radio frequency generator between the electrodes. A standard, solid state RF generator was used which generated an output at 81.36 MHz at greater than four kilowatts. The output of the generator is coupled into the laser using a suitable impedance matching network (not shown) which matches the generator to the lit discharge. In this embodiment, the RF current is connected to the hot electrode 36 at one point through standard insulated electrical feed through 42 that is located as close as possible to the attachment point.

The other electrode 38 and the housing 20 are connected to ground. A plurality of inductance coils 44 are electrically connected between the electrodes to cancel any capacitance effects and control the voltage distribution along the electrode. Preferably, the resonant frequency of the electrodes with the added inductors is within a few MHz of the RF excitation frequency.

As noted above, the subject laser includes an improved support system for the electrodes. More specifically, the lower electrode 38 is connected to end plate 24 via a support bracket 50. The other end of the lower electrode 38 is supported by a second support bracket 52. The second support bracket is rigidly connected to the electrode. The free end of the bracket 52 includes a pin 54 which projects into a complementary mating recess 56 in end plate 22. The extent to which the pin is received in the recess will vary as the length of electrode 38 varies during operation of the laser. In this manner, the electrode is not constrained in a manner which could result in warping and deviation from the desired separation between the electrodes.

In the illustrated embodiment, a spring 58 is mounted on pin 54 of the second support member in a manner to abut the end plate 22. The spring functions to provide an electrical connection further grounding electrode 38.

As noted above, in the prior art slab lasers, the pair of electrodes were typically separated by elongated dielectric blocks which also confined the discharge and produced hard edges to the electrical field. In contrast, in the subject laser, the means for supporting the upper electrode from the lower electrode is spaced away from the discharge so that sides of the discharge are apodized.

As best seen in Figures 6 and 7, the support means includes a plurality dielectric brackets 60. In the preferred embodiment, there are only three narrow brackets 60 on each side of the electrodes so that the discharge is substantially unblocked. Moreover, the brackets are generally U-shaped such that center of each bracket is spaced beyond the discharge. By this arrangement, the discharge is only confined by the electric field and presents a much smoother fall off in density near the edges. It is believed that this design contributes to improve mode performance. Another advantage to this configuration is that it allows the hot, dissociated laser gas to flow freely out of the space between the electrodes while allowing cooler gas to enter and replenish the discharge. Still another advantage to this design is that the discharge can be observed if windows are placed in the housing.

In order for the laser to operate effectively at higher powers, a cooling system must be provided to carry heat away from the electrodes. In an embodiment of the invention, the cooling system includes a pair of upper and lower fluid carrying copper pipes 70 and 72. The ends of pipes 70, 72 pass through and are electrically grounded to the end plate 24 of housing 20. The end segments of each of pipe run along the length of the electrodes close to the inner surface of the housing. Each pipe includes a center segment 74,75 which runs down and back along the electrode.

In accordance with an embodiment of the invention, the outer surfaces of the electrodes are provided with channels 76 and 78 for receiving the pipes. Preferably, the bottom of each channel is nickel plated and the center segments 74,75 are soldered into the channel to maximize heat conduction. The depth of the channels brings them close to the geometric center of the electrodes. In this manner, any warping of the electrodes which might arise due to stresses that are created because of the different thermal expansion rates of the pipes and electrodes will tend to be minimized.

As been best in Figures 2, the end segments of both pipes are provided with U-shaped bend sections 82 which are also twisted out of plane. These sections provide some flexibility for movement of the pipes as they expand due to heat.

The upper cooling pipe 70 is further provided with a pair of insulated sections 84. The insulated sections 84 function to electrically isolate the center segment 74 of the pipe, which is electrically hot, from the remainder of the pipe which is electrically grounded. In the preferred embodiment, the end serpents of the pipe are located very close to the grounded housing. The insulative sections 84 are angularly oriented so that the electrically hot portions of the pipe are spaced away from the grounded housing and placed closer to the hot electrode 36.

As will be discussed in greater detail below, the selection of mirror spacing in the subject laser is important for maximizing power and improved mode control. It is desirable to place the mirrors 30, 32 far enough away from the end of the electrodes so the degradation from the discharge is minimized. On the other hand, the mirrors must not be spaced so far away as to make the overall container unwieldy. In order to meet this requirement from a packaging standpoint, it is necessary to place the mirrors inside the housing 20. It is also necessary to provide a means to adjust the angle of the mirrors from outside the sealed housing to maximize performance.

The latter goals are achieved through the use of improved mirror assemblies 26 and 28. As will be seen, these two assemblies are functionally equivalent. The only difference is that assembly 26 includes a window 34 for transmitting the laser light.

The mirror assemblies are best seen in Figures 8 through 12. Each mirror assembly is formed in an end plate 22, 24 and includes a circular groove 90. The groove extends towards the inner surface of the end plate an amount sufficient to define a radially extending, planar flexure area 92. The groove 90 also defines a tilt member 94 located radially inside the groove.

A mirror mount 96 is connected to the tilt member 94 on the inner surface of the end plate. As can be appreciated, if the angle of the tilt member is varied, the angle of the mirror mount 96 will similarly be varied.

The mirror assembly includes a means for adjusting the angle of the tilt member. More specifically, and as best seen in Figures 10 and 13, four pins 98 are slidably mounted in the end plate in a manner to pass through groove 90 and contact tilt member 94. Associated with each pin 98 is a screw member 102 which is threadably engaged with a complementary opening 104. By rotating a screw member, the associated pin can be driven against the tilt member 94. As can be seen in Figures 8 and 11, as a pin is driven into the tilt member, the tilt member will tend to rotate about the radial flexure region 92. By adjusting the positions of the screw members and pins, the mirrors can be angularly adjusted from the outside of the housing.

The mirrors 30 and 32 are fixedly mounted to the mirror mounts 96. Each mirror includes a silicon substrate to which is coated a metal coating of either gold or silver and this is then overcoated with a dielectric stack of thorium fluoride and zinc sulfide to enhance the mirror reflectivity at the laser wavelength. To further protect the mirror from degradation, a very thin top coating having a thickness of about 2 microns can be added. Suitable materials for the top coating include an extra layer of thorium fluoride or germanium. Germanium better resists the type of scratches which occur from handling but is more subject to absorption problems at higher powers. The extra coating layer does cause some added losses which must be balanced against improved lifetime.

As discussed above, stability, power output and mode control have been enhanced with the resonator structure of the subject laser. The resonator structure is best seen in Figures 3 and 4. More specifically, and as seen in Figure 3, the mirrors 30 and 32 define a negative branch unstable resonator in the slab or nonwaveguide dimension. A confocal unstable resonator is the desired resonator configuration in order to produce a collimated output beam and to achieve the maximum laser efficiency. As noted above, mirror 30 is shorter than mirror 32 and therefore light is coupled out of the resonator just past the end of mirror 30, through opening 110 and past window 34. The resonator is considered a negative branch unstable resonator because the beam crosses the optical axis an odd number of times, in this case, once. As noted above, in the prior art $CO_2$ slab waveguide lasers, only positive branch unstable resonators have been used. It is believed that despite the conventional wisdom, the negative branch unstable resonator provides enhanced performance.

In the preferred method of designing the resonator, it was first determined what would be a desirable length for the gain medium. Then the desired output coupling was selected. In this case, it is preferable to have the output coupling be on the order of 16%. Using these two figures, the radii of curvature of the two mirrors were selected based on the following standard formulas:

(1)　　　$(R_1 + R_2)/2$ = Mirror spacing for confocal conditions and for filling the gain medium on one pass of the collimated beam.

(2)　　　$(M-1)/M$ = 21% (desired output coupling)

where M is equal to the magnification and is given by:

(3)　　　$R_2/R_1$ = Magnification

In the embodiment wherein the electrode length is 60cm, the radius of curvature of the full size mirror 32 is 730mm and of the shorter mirror 30 is 580mm and the spacing between the mirrors is half the sum of the radii of curvature or 655mm. Both of the mirrors are spherical and therefore have the same radius of curvature in both dimensions.

The shorter mirror 30 or output mirror must be cut so that the spacing between the edge of the mirror and the edge of the discharge allows the proper fraction of the beam to pass out of the resonator. The dimensions of this mirror depend on the width of the electrodes less a small correction for edge effects and mechanical tolerances. The small mirror must be cut so that the output beam width is the fractional output coupling times the effective width of the electrode. For the above example, the electrodes were 44mm wide with 1mm for the edge and mechanical tolerances. Thus the width of the output beam is:

(4)　　　0.21 x (44-1)mm = 9.0mm

Experiments have been performed with 40cm electrodes. The following negative branch unstable resonator designs have been found acceptable.

|  | Case I | Case II |
| --- | --- | --- |
| Radius of Mirror 30 | 384mm | 377mm |
| Radius of Mirror 32 | 420mm | 430mm |
| Spacing L | 402mm | 403mm |

Figure 4 illustrates the waveguide dimension where a stable resonator is defined. As noted above, in the prior art waveguide lasers, the mirrors were placed quite close to the ends of the waveguide, usually less than 4mm away which approached a Type I resonator configuration.

In contrast, in the subject invention, the ends of the waveguides are spaced from the mirrors at least 10mm and preferably 20mm away. Rather than use the prior art theory for mirror shape and placement, it has been found preferable to first optimize the resonator design for the unstable resonator dimension. Once the location and radius of curvature of the mirrors has been determined, the actual length of the waveguide electrodes are determined to optimize the spacing in view of the curvature of the mirrors. More specifically, the spacing between the ends of the electrodes and the mirrors is selected so that the radius of curvature of the wavefront of the beam as it reaches the mirrors matches the radius of curvature of the mirrors.

The relationship between the radius of curvature of the wavefront with respect to the distance from the end of the waveguide is illustrated in Figure 14 In this plot, it is assumed that the light has a wavelength of 10.6 microns, has a planar wavefront when exiting from a 1.9mm square waveguide and that the mode structure of the light is substantially equivalent to a $TEM_{00}$ mode. If the radius of curvature of the mirrors is known, the desired spacing can easily be matched. It is believed that this approach results in substantially all of the light being returned back into the waveguide except from effects due to diffraction.

It should be understood that this resonator design approach is significantly different from prior art teachings. For example, according to prior art theory, for a 1.9mm square waveguide, one would use mirrors having a radius of curvature of 850mm and a spacing from the end of the waveguide of 850mm for a Type II resonator. In a Type III resonator the radius of curvature would be 260mm at a distance of 130mm from the end of the waveguide. An analysis of the subject structure using prior art theory would indicate that one should expect to experience a loss of roughly 15%. Experimental measurements confirmed that this resonator structure was as efficient as those used in the prior art, yet was more stable, and subject to less degradation. In addition, enhanced mode operation was achieved.

Figure 15 is a plot of the average output power with operating time of a 60cm slab laser operating in a pulsed mode. The peak RF input power is 1200 Watts with a pulse length of 500µs and a 50% duty cycle. The RF power was delivered at a frequency of 81.4 MHz to this laser and the gas mix was three parts helium to one part $CO_2$ to one part nitrogen and five percent xenon. The RF and gas mix parameters are the same for the tests shown in Figures 16 through 19. The total pressure is also plotted in Figure 15 and shows no significant changes from 56 torr over the duration of this test.

Figure 16 shows the average output power of a 60cm slab laser as a function of the average RF input power. The tube had an operating pressure of 80 torr and was operated in a pulsed mode with 300 µs pulse length and duty cycles of 10% to 50%. The peak RF power was set to 3 kW and 4kW peaks.

Figure 17 shows the effect on the average output power of operating the tube with different pulse lengths. It was operated in a pulsed mode with pulse length of 30 µs and 300 µs for duty cycles ranging from 10% to 50%.

Figure 18 shows the change in the average output power with increasing average RF input power for various gas pressures. For pulsed power of 4 kW and 300 µs pulse length, the major variations in performance at these various gas pressures occurs only at the highest average powers of about 1800W.

Figure 19 shows the change in beam diameter as the beam propagates away from the laser. The mode diameters were determined by measuring mode burns in 3/8 inch thick plexiglass made at about 100W of output power. Curve fitting the beam diameter with distance indicates that this is consistent with an $M^2$ of 1.2 in both the waveguide axis and unstable resonator axis.

One advantage to the subject laser design is that it is able to quickly generate and maintain high pulse energies. This can be important when the laser is used for medical procedures. More specifically, in medical procedures it is desirable to vaporize larger surface areas of tissue without damaging the surrounding tissue from thermal heat flow. This can be achieved by using short time duration, high power pulses from the subject laser. In most prior art medical lasers, energies on the order 50 millijoules per pulse could be delivered. In contrast, the subject laser can generate a peak power of 500 Watts (joules/second) for up to a millisecond at repetition rates of 500 Hz, which will allow delivery of 500 millijoules per pulse, an order of magnitude greater than in the past.

In experiments on tissue, it has been found that where the energy per pulse exceeds 100 millijoules, the nature of the interaction of the beam with the tissue changes. The tissue remaining after ablation is found to be much cleaner with a more pronounced absence of char coupled with a thinner layer of damaged tissue. The desired pulse width should be less than one millisecond and preferably closer to 0.5 milliseconds. Repetition rates of up to several 100 pulses per second can be used. In addition to more common surgical procedures, such short, high energy pulses could also be used for burn debridement.

When operating at higher power levels and fast repetition rates, there will typically be enough power to light the discharge and start the laser. However, at low powers, (ie. below 10 Watts average power) and low repetition rates (ie. more than 50 milliseconds between pulse bursts), the large impedance mismatch between the RF generator and the unlit discharge makes the delivery of that energy difficult and noticeable delays can occur in exciting the discharge. One method of overcoming this problem would be to run the power supply in a simmer mode to keep the discharge lit and the laser generating minimal power.

In another approach, a means for preionizing the discharge can be provided to encourage the breakdown of the laser gas. In the preferred embodiment, this means is provided by a lamp installed within the housing and shown in phantom line at 110 in Figure 5. Lamp 110 is a low pressure mercury-argon quartz lamp available from Jelight of Laguna Hills, Ca., part number 81-3306-2. It is believed that the ultraviolet light (185 and 254 nanometers) from this lamp functions to dissociate the molecules in the gas promoting the discharge. The use of the lamp also allows the gas to be maintained at a higher pressure which increases output power.

In the lasers built by the applicants, the lamp is mounted beyond the immediate discharge region, above the hot electrode. Greater efficiency could be achieved if the lamp were mounted in a location such that the ultraviolet radiation could reach the discharge more directly. It would also be possible to mount the lamp outside of the housing and opposite a window which transmitted the ultraviolet radiation into the housing.

As shown in Figure 4, the RF energy can be coupled to the hot electrode at one end thereof. This approach has been found suitable for short electrodes, on the order of 40cm. When 60cm electrodes were employed, it was found that better performance was achieved if the RF energy was coupled into the electrode at center of its length. In tests to scale the laser to even longer lengths, it was found that delivery of the RF energy at a single point created an uneven discharge since the length of the electrode began to correspond to the length of the RF waves.

Accordingly, when the electrode length is 80cm or longer, it is desirable to couple the RF energy into the electrodes at more than one location. However, the RF energy coupled into the laser at both points must be in phase. Figure 20 illustrates the one approach to achieve this result.

The laser in Figure 20 includes a pair of electrodes 120 and 122. The RF energy is coupled to the hot electrode 120 at two locations. The energy is generated by a pair of amplifiers 124 and 126 which are driven by a common oscillator 128 which keeps the amplifiers in phase. The output from the amplifiers is passed through individual impedance matching networks 132 and 134 to the hot electrode. A combiner 136 can be interposed between the amplifiers 124, 126 and the respective matching networks 132, 134 to control the interaction between amplifiers and the load provided by the laser tube so that each amplifier will provide the same power to the laser. All of the electrical leads should be of the same length to insure that the energy delivered to both points on the electrode 120 is in phase. Using this approach, a more stable and even discharge can be maintained.

Although not illustrated, an additional mechanism to reduce degradation of the mirrors would be to add ceramic spacers to the ends of the waveguide electrodes. The ceramic spacers would still function to guide the light, but the discharge would terminate at the end of the aluminum electrodes. The ceramic material would interact with neutral and ionic molecular fragments to reduce their diffusion toward the mirror surface. If left to diffuse toward the mirror surface, these molecular fragments are believed to lead to degradation of the mirror surface.

In summary, there has been disclosed a $CO_2$ slab waveguide laser. The laser includes a pair of spaced apart electrodes having opposed light reflecting surfaces. The electrodes are dimensioned in a manner to guide light in a plane perpendicular to the reflecting surfaces. Light parallel to the reflecting surfaces is not constrained other than by the resonator mirrors. The resonator structure includes a negative branch unstable resonator in the nonwaveguide dimension. A stable resonator is used in the waveguide dimension but the mirror spacing from the end of the guide is based in part on the configuration of the unstable resonator.

A unique support structure is disclosed for maintaining the electrodes in a spaced apart orientation without confining the discharge. Further refinements are disclosed for cooling the laser and for accommodating thermal expansion of the parts. Finally, an improved adjustable mirror assembly is provided which allows the tilt angle of the mirror to be varied from outside of the housing.

The subject laser is capable of generating short, high energy pulses suitable for treating tissue.

While the invention has been described with reference to a preferred embodiment, various changes and modifications could be made therein, by one skilled in the art, without varying from the scope of the subject invention as defined by the appended claims.

## Claims

1. A slab laser comprising:

   a pair of elongate, spaced apart electrodes (36,38) having opposed, planar, light reflecting surfaces;
   a laser gas disposed between said electrodes (36,38);
   means (42) for exciting said laser gas to create a gas discharge; and
   a pair of spherical mirrors (30,32), with the configuration of said mirrors (30,32) being selected such that a stable waveguide resonant cavity is defined in a plane perpendicular to said light reflecting surfaces, and an unstable resonator is defined in a plane parallel to said light reflecting surfaces, characterised in that the spherical mirrors (30,32) are concave and the unstable resonator is a negative branch unstable resonator, and in that the lengths of the electrodes (36,38) are such that, at each mirror location, the radius of curvature of the wavefront of the laser beam in relation to an axis extending between said light reflecting surfaces substantially matches the radius of curvature of the respective mirror (30,32).

2. A slab laser according to claim 1, characterised in that the means for exciting the gas includes an RF generator (128, 124, 126), the output of which is coupled to one (120) of the electrodes.

3. A slab laser according to claim 1, characterised by an adjustable mirror assembly for attachment to the end of a housing (20) of the laser, said assembly comprising:

   an end plate (24) for attachment to the end of the housing (20) of said laser, wherein said attachment provides a vacuum seal between the assembly and the housing (20), with the outer surface of said plate (24) having a circular groove (90) extending to a depth sufficient to define a flexure area (92) between the bottom of the groove (90) and the inner surface of the plate (24), and with the portion of the plate (24) radially inward of said groove (90) defining a tilt member (94);

a mirror mount (96) for supporting a mirror (32), said mount (96) being connected to the inner surface of said plate (24), radially inwardly of said groove (90) and on said tilt member (94); and

means (98,102), mounted to said plate (24) and outside of said housing (20) for applying a torque to said tilt member (94) in order to adjust the angle of said mirror mount (96).

4. A slab laser according to claim 3, characterised in that said means for applying torque to the tilt member (94) consists of a plurality of pins (98), slidably mounted within said plate (24) radially outward of said groove (90) and about the circumference of said tilt member (94), with the radial position of said pins (98) being adjustable in a manner to place a varying torque on said tilt member (94).

5. A slab laser according to claim 1, characterised by a laser housing (20), having opposed ends;

a first support bracket (50) connected between one end of said housing (20) and one end of a said electrode (38); and

a second support bracket (52) connected to the other end of said electrode (38) having an elongate pin (54) projecting towards the other end of said housing (20), with said other end having a recess (56) for slidably receiving said pin (54) of said second support bracket (52), with the depth of said recess (56) being sufficient to allow the extent of said pin (54) within said recess (56) to vary as the electrode (38) thermally expands during operation of the laser.

6. A slab laser according to claim 5, characterised in that said pin (54) and said recess (56) have complementary configurations.

7. A slab laser according to claim 6, characterised in that said complementary configurations are cylindrical.

8. A slab laser according to claim 5, characterised in that said second support bracket (52) provides an electrical connection to said other end of the housing (20).

9. A slab laser according to claim 1, characterised by

an electrically grounded housing (20),

one of said electrodes (36) being located within said housing (20) and connected to a power source (42) comprising said means for exciting said laser gas; and

means for cooling said electrode (36), said means including a fluid-carrying conductive pipe (70) which passes into and through said housing (20), said pipe (70) including a center segment (74) which is in thermal contact, with said electrode (36) and a pair of end segments which are spaced from said electrode (36) and grounded to said housing (20), said center segment (74) being joined to said end segments by insulative pipe sections (84) such that the center segment (74) can be electrically hot while said end segments remain grounded.

10. A slab laser according to claim 9, characterised in that said insulative pipe sections (84) are oriented such that the end segments of the pipe (70) are located near the housing wall and the center segment (74) of the pipe is located closer to said electrode (36).

11. A slab laser according to claim 1 characterised by means for cooling said electrodes (36,38), said means including fluid carrying pipes (70,72), and wherein the outer surfaces of said electrodes (36,38) are provided with elongate channels (76,78) for receiving at least a portion of said pipes (70,72) to maximize cooling.

12. A slab laser according to claim 11, characterised in that said electrodes (36,38) are formed from a material having a different coefficient of thermal expansion than said pipes (70,72), and wherein said channels (76,78) in said electrodes (36,38) are located in a manner to minimize bending torque induced by heating of the electrodes (36,38).

13. A slab laser according to claim 12, characterised in that said channels (76,78) are located near the geometric center of said electrodes (36,38).

14. A slab laser according to claim 11, characterised in that said pipes (70,72) include at least one segment which is not located in said channels (76,78), and said segment of said pipes (70,72) includes a bend to allow for thermal expansion.

**EP 0 486 152 B1**

**15.** A slab laser according to claim 1, characterised by means (60) for supporting said electrodes (36,38) in said spaced apart relationship, said means (60) being spaced away from said gas discharge such that the characteristics of said gas discharge are substantially unaffected by said support means (60) .

**16.** A slab laser according to claim 15, characterised in that said support means (60) is configured such that said gas discharge between said electrodes (36,38) is visually unobstructed.

**17.** A slab laser according to claim 15, characterised in that said support means is defined by a plurality of spaced apart, U-shaped, dielectric members (60) connected between said electrodes (36,38) .

**18.** A slab laser according to claim 15, characterised in that said means (42) for exciting said gas functions to deliver an RF current to said electrodes (36,38).

**19.** A slab laser according to claim 1, characterised by means (110) for preionizing said gas to facilitate the creation of said gas discharge, said means including a light source for emitting photons to promote dissociation of said gas.

**20.** A slab laser according to claim 19, characterised in that said light source is a lamp.

**21.** A slab laser according to claim 20, characterised in that said lamp is a mercury-argon lamp.

**22.** A slab laser according to claim 20, characterised in that said lamp is located within a housing (20) of said laser.

**23.** A slab laser according to claim 1, characterised by a housing (20) for containing said laser gas; and

a lamp (110) for emitting photons to promote dissociation of said gas to facilitate the creation of said gas discharge.

**24.** A slab laser according to claim 1, characterised in that said means for exciting said gas includes a means (128,124,126) for generating RF energy; and

means (132,134) for electrically connecting said excitation means to one of said electrodes (120,122) at more than one location and in a manner such that said RF energy in phase at said locations.

**25.** A slab laser according to claim 24, characterised in that said means for generating RF energy includes at least two amplifiers (124,126) driven by a single RF oscillator (128).

**26.** A slab laser according to claim 25, characterised in that the output of said amplifiers (124,126) is electrically connected to said one electrode (120) through an impedance matching network (132,134).

**27.** A slab laser according to claim 1, characterised in that the laser is operated to generate a pulsed laser beam wherein each pulse is shorter than one millisecond and has an energy per pulse greater than 100 millijoules.

**28.** A slab laser according to claim 27, characterised in that said pulses are about 0.5 milliseconds or less in duration.

**29.** A slab laser according to any preceding claim, characterised in that said laser a $CO_2$ laser.

**Patentansprüche**

**1.** Laser, insbesondere Slab-Laser, umfassend:

ein Paar ausgedehnter, beabstandeter Elektroden (36, 38) mit gegenüberliegenden, planaren, lichtreflektierenden Oberflächen,
ein zwischen den Elektroden (36, 38) angeordnetes Lasergas,
eine Einrichtung (42) zum Anregen des Lasergases zum Erzeugen einer Gasentladung und
ein Paar sphärischer Spiegel (30, 32), wobei die Ausbildung der Spiegel (30, 32) so ausgewählt ist, daß eine stabile, resonante, wellenleitende Kavität in einer Ebene senkrecht zu den lichtreflektierenden Oberflächen definiert ist und ein unstabiler Resonator in einer Ebene parallel zu den lichtreflektierenden Flächen definiert ist,

dadurch gekennzeichnet,

daß die sphärischen Spiegel (30, 32) konkav sind und der unstabile Resonator ein unstabiler negativer Zweigresonator ist und

daß die Längen der Elektroden (36, 38) so sind, daß an jedem Spiegelort der Radius der Krümmung der Wellenfront des Laserstrahls in Bezug auf eine sich zwischen den lichtreflektierenden Oberflächen erstreckende Achse im wesentlichen an den Radius der Krümmung des jeweiligen Spiegels (30, 32) angepaßt ist.

2. Laser, insbesondere Slab-Laser, nach Anspruch 1,

dadurch gekennzeichnet,
daß die Einrichtung zum Anregen des Gases einen HF-Generator (128, 124, 126) umfaßt, wobei dessen Ausgang an eine (120) der Elektroden gekoppelt ist.

3. Laser, insbesondere Slab-Laser, nach Anspruch 1,

gekennzeichnet durch
eine justierbare Spiegelbaugruppe zur Befestigung an dem Ende eines Gehäuses (20) des Lasers, wobei die Baugruppe umfaßt:
eine Endplatte (24) zum Befestigen am Ende des Gehäuses (20) des Lasers, wobei die Befestigung eine Vakuumdichtung zwischen der Baugruppe und dem Gehäuse (20) bereitstellt, wobei die äußere Oberfläche der Platte (24) eine kreisförmige Nut (90) hat, die sich bis zu einer Tiefe erstreckt, die ausreicht, um einen Biegebereich (92) zwischen dem Boden der Furche (90) und der inneren Oberfläche der Platte (24) zu definieren, und wobei der Abschnitt der Platte (24) radial einwärts von der Furche (90) ein Kippelement (94) definiert, eine Spiegelbefestigung (96) zum Tragen eines Spiegels (32), wobei die Befestigung (96) an der inneren Oberfläche der Platte (24) radial einwärts von der Furche (90) und an dem Kippelement (94) befestigt ist, und
eine Einrichtung (98, 102), die an der Platte (24) und außerhalb des Gehäuses (20) befestigt ist, zum Aufbringen einer Verdrehungskraft auf das Kippelement (94), um den Winkel der Spiegelbefestigung (96) zu justieren.

4. Laser, insbesondere Slab-Laser, nach Anspruch 3,

dadurch gekennzeichnet,
daß die Einrichtung zum Aufbringen einer Verdrehkraft auf das Kippelement (94) eine Vielzahl von Stiften (98) umfaßt, die radial auswärts von der Furche (90) innerhalb der Platte (24) und um den Umfang des Kippelements (94) verschieblich gehalten sind, wobei die radiale Stellung der Stifte (98) so justierbar ist, daß eine sich ändernde Verdrehkraft auf das Kippelement (94) aufgebracht wird.

5. Laser, insbesondere Slab-Laser, nach Anspruch 1,

gekennzeichnet durch
ein Lasergehäuse (20) mit gegenüberliegenden Enden, einen ersten Haltearm (50), der zwischen einer Seite des Gehäuses (20) und einer Seite der Elektrode (38) angeschlossen ist, und
einen zweiten Haltearm (52), der an dem anderen Ende der Elektrode (38) angeschlossen ist, mit einem langgestreckten Stift (54), der sich zu dem anderen Ende des Gehäuses (20) erstreckt, wobei das andere Ende eine Ausnehmung (56) zum verschieblichen Aufnehmen des Stiftes (54) des zweiten Haltearms (52) aufweist, wobei die Tiefe der Ausnehmung (56) ausreicht, um es dem Stift (54) zu gestatten, dessen Erstreckung innerhalb der Ausnehmung (56) zu zu ändern, wenn sich die Elektrode (38) während des Betriebs des Lasers thermisch ausdehnt.

6. Laser, insbesondere Slab-Laser, nach Anspruch 5,

dadurch gekennzeichnet, daß der Stift (54) und die Ausnehmung (56) komplementäre Ausbildungen haben.

7. Laser, insbesondere Slab-Laser, nach Anspruch 6,

dadurch gekennzeichnet, daß die komplementären Ausbildungen zylindrisch sind.

8. Laser, insbesondere Slab-Laser, nach Anspruch 5,

dadurch gekennzeichnet, daß der zweite Haltearm (52) eine elektrische Verbindung zum anderen Ende des Gehäuses (20) herstellt.

9. Laser, insbesondere Slab-Laser, nach Anspruch 1,

gekennzeichnet durch
ein elektrisch geerdetes Gehäuse (20),
wobei eine der Elektroden (36) innerhalb des Gehäuses (20) angeordnet ist, und mit einer Stromquelle (42), welche die Einrichtung zum Anregen des Lasergases umfaßt, verbunden ist und durch
eine Einrichtung zum Kühlen der Elektrode (36), wobei die Einrichtung ein fluidführendes, leitfähiges Rohr (70) umfaßt, welches sich in dem und durch das Gehäuse (20) erstreckt, wobei das Rohr (70) ein Mittensegment (74) umfaßt, welches in thermischem Kontakt mit der Elektrode (36) steht und mit einem Paar von Endsegmenten, die von der Elektrode (36) beabstandet sind und an dem Gehäuse (20) geerdet sind, wobei das Mittensegment (74) an den Endsegmenten durch isolierende Rohrabschnitte (84) so angeschlossen ist, daß das Mittensegment (74) elektrisch unter Spannung stehen kann, während die Endsegmente geerdet bleiben.

10. Laser, insbesondere Slab-Laser, nach Anspruch 9,

dadurch gekennzeichnet, daß die isolierenden
Rohrabschnitte (84) derart ausgerichtet sind, daß die Endsegmente des Rohrs (70) nahe der Gehäusewand und das Mittensegment (74) des Rohrs enger an der Elektrode (36) angeordnet sind.

11. Laser, insbesondere Slab-Laser, nach Anspruch 1,

gekennzeichnet durch eine Einrichtung zum Kühlen der Elektroden (36, 38), wobei die Einrichtung fluidführende Rohre (70, 72) umfaßt und wobei die äußeren Oberflächen der Elektroden (36, 38) mit langgestreckten Kanälen (76, 78) zum Aufnehmen wenigstens eines Abschnitts der Rohre (70, 72) zum Maximieren des Kühlens versehen sind.

12. Laser, insbesondere Slab-Laser, nach Anspruch 11,

dadurch gekennzeichnet, daß die Elektroden (36, 38) aus
einem Material ausgebildet sind, das einen anderen thermischen Ausdehnungskoeffizienten als die Rohre (70, 72) hat und wobei die Kanäle (76, 78) in den Elektroden (36, 38) auf eine Weise angeordnet sind, daß durch Erhitzen der Elektroden (36, 38) erzeugte Biegekräfte minimiert sind.

13. Laser, insbesondere Slab-Laser, nach Anspruch 12,

dadurch gekennzeichnet, daß die Kanäle (76, 78) nahe der geometrischen Mitte der Elektroden (36, 38) angeordnet sind.

14. Laser, insbesondere Slab-Laser, nach Anspruch 11,

dadurch gekennzeichnet, daß die Rohre (70, 72) wenigstens ein Segment umfassen, das nicht in den Kanälen (76, 78) angeordnet ist, und wobei das Segment der Rohre (70, 72) eine Biegung umfaßt, um thermische Ausdehnung zu gestatten.

15. Laser, insbesondere Slab-Laser, nach Anspruch 1,

gekennzeichnet durch eine Einrichtung (60) zum Halten der Elektroden (36, 38) in beabstandetem Verhältnis, wobei die Einrichtung (60) von der Gasentladung so beabstandet ist, daß die charakteristischen Eigenschaften, insbesondere die Kennlinie der Gasentladung, durch die Halteeinrichtung (60) im wesentlichen unbeeinflußt sind.

16. Laser, insbesondere Slab-Laser, nach Anspruch 15,

dadurch gekennzeichnet, daß die Halteeinrichtung (60) derart ausgebildet ist, daß die Gasentladung zwischen den Elektroden (36, 38) visuell ungestört ist.

**17.** Laser, insbesondere Slab-Laser, nach Anspruch 15,

dadurch gekennzeichnet, daß die Halteeinrichtung durch eine Vielzahl beabstandeter, U-förmiger, dielektrischer Elemente (60), die zwischen den Elektroden (36, 38) angeschlossen sind, definiert ist.

**18.** Laser, insbesondere Slab-Laser, nach Anspruch 15,

dadurch gekennzeichnet, daß die Einrichtung (42) zum Anregen des Gases den Elektroden (36, 38) einen HF-Strom zuführt.

**19.** Laser, insbesondere Slab-Laser, nach Anspruch 1,

gekennzeichnet durch eine Einrichtung (110) zum Vorionisieren des Gases, um die Erzeugung einer Gasentladung zu erleichtern, wobei die Einrichtung eine Lichtquelle zum Emittieren von Photonen zum Unterstützen der Dissoziation des Gases umfaßt.

**20.** Laser, insbesondere Slab-Laser, nach Anspruch 19,

dadurch gekennzeichnet, daß die Lichtquelle eine Lampe ist.

**21.** Laser, insbesondere Slab-Laser, nach Anspruch 20,

dadurch gekennzeichnet, daß die Lampe eine Quecksilber-Argon-Lampe ist.

**22.** Laser, insbesondere Slab-Laser, nach Anspruch 20,

dadurch gekennzeichnet, daß die Lampe innerhalb des Gehäuses (20) des Lasers angeordnet ist.

**23.** Laser, insbesondere Slab-Laser, nach Anspruch 1,

gekennzeichnet durch ein Gehäuse (20) zum Aufnehmen des Lasergases und eine Lampe (110) zum Emittieren von Photonen, um die Dissoziation des Gases zu fördern, um die Erzeugung der Gasentladung zu erleichtern.

**24.** Laser, insbesondere Slab-Laser, nach Anspruch 1,

dadurch gekennzeichnet, daß die Einrichtung zum Anregen des Gases eine Einrichtung (128, 124, 126) zum Erzeugen von HF-Energie umfaßt und
eine Einrichtung (132, 134) zum elektrischen Verbinden der Anregungseinrichtung mit einer der Elektroden (120, 122) an höchstens einem Ort und auf eine Weise so, daß die HF-Energie an dem Ort in Phase ist, umfaßt.

**25.** Laser, insbesondere Slab-Laser, nach Anspruch 24,

dadurch gekennzeichnet, daß die Einrichtung zum Erzeugen der HF-Energie wenigstens zwei Verstärker (124, 126) umfaßt, die durch einen einzelnen HF-Oszillator (128) angesteuert sind.

**26.** Laser, insbesondere Slab-Laser, nach Anspruch 25,

dadurch gekennzeichnet, daß das Ausgangssignal der Verstärker (124, 126) durch ein Impedanzanpassungsnetzwerk (132, 134) elektrisch an die eine Elektrode (120) angeschlossen ist.

**27.** Laser, insbesondere Slab-Laser, nach Anspruch 1,

dadurch gekennzeichnet, daß der Laser betrieben wird, um einen gepulsten Laserstrahl zu erzeugen, wobei jeder Puls kürzer als 1 ms ist und eine Energie pro Puls von mehr als 100 mJ hat.

**28.** Laser, insbesondere Slab-Laser, nach Anspruch 27,

dadurch gekennzeichnet, daß die Pulse ungefähr 0,5 ms oder weniger an Dauer aufweisen.

**29.** Laser, insbesondere Slab-Laser, nach einem der vorstehenden Ansprüche,

dadurch gekennzeichnet, daß der Laser ein $CO_2$-Laser ist.

**Revendications**

**1.** Laser à lame comprenant:

une paire d'électrodes (36,38) allongées espacées l'une de l'autre ayant des surfaces opposées planes réfléchissant la lumière;
un gaz à effet laser disposé entre lesdites électrodes (36,38);
un moyen (42) pour exciter ledit gaz à effet laser afin de créer une décharge de gaz; et
une paire de miroirs (30,32) sphériques, la configuration desdits miroirs (30,32) étant sélectionnée de façon qu'une cavité résonnante de guide d'ondes stable soit définie dans un plan perpendiculaire auxdites surfaces réfléchissant la lumière, et qu'un résonateur instable soit défini dans un plan parallèle auxdites surfaces réfléchissant la lumière, caractérisé en ce que les miroirs (30,32) sphériques sont concaves et le résonateur instable est un résonateur instable à branche négative, et en ce que les longueurs des électrodes (36, 38) sont telles que, à l'emplacement de chaque miroir, le rayon de courbure du front d'onde du faisceau laser par rapport à un axe s'étendant entre lesdites surfaces réfléchissant la lumière, soit sensiblement identique au rayon de courbure du miroir ( 30,32) correspondant.

**2.** Laser à lame selon la revendication 1, caractérisé en ce que le moyen pour exciter le gaz comporte un générateur (128,124,126) RF dont la sortie est couplée à l'une (120) des électrodes.

**3.** Laser à lame selon la revendication 1, caractérisé par un montage de miroirs réglables destinés à être fixés à l'extrémité d'un boîtier (20) du laser, ledit montage comprenant:

une plaque (24) d'extrémité destinée à être fixée à l'extrémité du boîtier (20) dudit laser, ladite fixation assurant l'étanchéité au vide entre le montage et le boîtier (20), la surface extérieure de ladite plaque (24) ayant une rainure (90) circulaire s'étendant jusqu'à une profondeur suffisante pour définir une zone (92) de flexion entre le fond de la rainure (90) et la surface intérieure de la plaque (24), et la partie de la plaque (24), qui est tournée radialement vers l'intérieur de ladite rainure (90), définissant un élément (94) de basculement;
un support (96) de miroir pour supporter un miroir (32), ledit support (96) étant relié à la surface intérieure de ladite plaque (24), radialement vers l'intérieur de ladite rainure (90), et sur ledit élément (94) de basculement; et
un moyen (98,102) monté sur ladite plaque (24) et à l'extérieur dudit boîtier (20) pour appliquer un couple audit élément (94) de basculement afin de régler l'angle dudit support (96) de miroir.

**4.** Laser à lame selon la revendication 3, caractérisé en ce que ledit moyen pour appliquer un couple audit élément (94) de basculement consiste en un ensemble de broches (98) montées de façon coulissante à l'intérieur de ladite plaque (24), radialement vers l'extérieur de ladite rainure (90), et sur la circonférence dudit élément (94) de basculement, la position radiale desdites broches (98) étant réglable de manière à imposer un couple variable audit élément (94) de basculement.

**5.** Laser à lame selon la revendication 1, caractérisé par un boîtier (20) de laser ayant des extrémités opposées;

une première patte (50) de support reliée entre une extrémité dudit boîtier (20) et une extrémité de ladite électrode (38); et
une seconde patte (52) de support reliée à l'autre extrémité de ladite électrode (38) ayant une broche (54) allongée faisant saillie vers l'autre extrémité dudit boîtier (20), ladite autre extrémité ayant un évidement (56) destiné à recevoir de façon coulissante ladite broche (54) de ladite seconde patte (52) de support, la profondeur dudit évidement (56) étant suffisante pour permettre une variation de la longueur de ladite broche (54) à l'intérieur dudit évidement (56) lorsque l'électrode (38) se dilate thermiquement pendant le fonctionnement du laser.

**6.** Laser à lame selon la revendication 5, caractérisé en ce que ladite broche (54) et ledit évidement (56) ont des configurations complémentaires.

**7.** Laser à lame selon la revendication 6, caractérisé en ce que lesdites configurations complémentaires sont cylindriques.

**8.** Laser à lame selon la revendication 5, caractérisé en ce que ladite seconde patte (52) de support assure une connexion électrique avec ladite autre extrémité du boîtier (20).

**9.** Laser à lame selon la revendication 1, caractérisé par un boîtier (20) électriquement relié à la masse,

l'une desdites électrodes (36) étant située à l'intérieur dudit boîtier (20) et connectée à une source (42) d'alimentation électrique comprenant ledit moyen pour exciter ledit gaz à effet laser; et

un moyen pour refroidir ladite électrode (36), ledit moyen comportant une canalisation (70) conductrice acheminant un fluide qui pénètre à l'intérieur dudit boîtier (20) et à travers celui-ci, ladite canalisation (70) comportant un segment (74) central qui est en contact thermique avec ladite électrode (36) et une paire de segments d'extrémité qui sont espacés de ladite électrode (36) et reliés à la masse dudit boîtier (20), ledit segment (74) central étant joint auxdits segments d'extrémité par des sections (84) de canalisation isolantes de façon que le segment (74) central puisse être électriquement chauffé alors que lesdits segments d'extrémité restent reliés à la masse.

**10.** Laser à lame selon la revendication 9, caractérisé en ce que lesdites sections (84) de canalisation isolantes sont orientées de façon que les segments d'extrémité de la canalisation (70) soient situés au voisinage de la paroi du boîtier et que le segment (74) central de la canalisation soit situé plus près de ladite électrode (36).

**11.** Laser à lame selon la revendication 1, caractérisé par un moyen pour refroidir lesdites électrodes (36,38), ledit moyen comportant des canalisations (70,72) d'amenée de fluide, et dans lequel les surfaces extérieures desdites électrodes (36,38) sont munies de canaux (76,78) allongés pour recevoir au moins une partie desdites canalisations (70,72) afin de rendre maximum le refroidissement.

**12.** Laser à lame selon la revendication 11, caractérisé en ce que lesdites électrodes (36,38) sont formées d'un matériau ayant un coefficient de dilatation thermique différent de celui des canalisations (70,72), et dans lequel lesdits canaux (76,78) dans lesdites électrodes (36,38) sont placés de manière à rendre minimum le couple de flexion induit par le chauffage des électrodes (36,38).

**13.** Laser à lame selon la revendication 12, caractérisé en ce que lesdits canaux (76,78) sont situés près du centre géométrique desdites électrodes (36,38).

**14.** Laser à lame selon la revendication 11, caractérisé en ce que lesdites canalisations (70,72) comportent au moins un segment qui n'est pas situé dans lesdits canaux (76,78), et ledit segment desdites canalisations (70,72) présente un coude pour tenir compte de la dilatation thermique.

**15.** Laser à lame selon la revendication 1, caractérisé par un moyen (60) pour supporter lesdites électrodes (36,38), auxdites positions relatives espacées l'une de l'autre, ledit moyen (60) étant éloigné de ladite décharge de gaz de façon que les caractéristiques de ladite décharge de gaz ne soient sensiblement pas affectées par ledit moyen (60) de support.

**16.** Laser à lame selon la revendication 15, caractérisé en ce que ledit moyen de support (60) est configuré de façon que ladite décharge de gaz entre lesdites électrodes (36,38) ne soit pas obturée visuellement.

**17.** Laser à lame selon la revendication 15, caractérisé en ce que ledit moyen de support est défini par un ensemble d'éléments (60) diélectriques en forme de U, espacés les uns des autres, reliés entre lesdites électrodes (36,38).

**18.** Laser à lame selon la revendication 15, caractérisé en ce que ledit moyen (42) pour exciter ledit gaz a pour fonction de délivrer un courant RF auxdites électrodes (36,38).

**19.** Laser à lame selon la revendication 1, caractérisé par un moyen (110) pour préioniser ledit gaz afin de faciliter la création de ladite décharge de gaz, ledit moyen comportant une source de lumière pour émettre des photons afin de favoriser la dissociation dudit gaz.

**20.** Laser à lame selon la revendication 19, caractérisé en ce que ladite source de lumière est une lampe.

**21.** Laser à lame selon la revendication 20, caractérisé en ce que ladite lampe est une lampe au mercure-argon.

**22.** Laser à lame selon la revendication 20, caractérisé en ce que ladite lampe est située à l'intérieur du boîtier (20) dudit laser.

**23.** Laser à lame selon la revendication 1, caractérisé par un boîtier (20) destiné à contenir ledit gaz à effet laser; et

une lampe (110) pour émettre des photons afin de favoriser la dissociation dudit gaz et de faciliter la création de ladite décharge de gaz.

**24.** Laser à lame selon la revendication 1, caractérisé en ce que ledit moyen pour exciter ledit gaz comporte un moyen (128,124,126) pour générer de l'énergie RF; et

un moyen (132,134) pour connecter électriquement ledit moyen d'excitation à l'une desdites électrodes (120,122) en plus d'un point et d'une manière telle que ladite énergie RF soit en phase auxdits points.

**25.** Laser à lame selon la revendication 24, caractérisé en ce que ledit moyen pour générer de l'énergie RF comporte au moins deux amplificateurs (124,126) attaqués par un seul oscillateur RF (128).

**26.** Laser à lame selon la revendication 25, caractérisé en ce que la sortie desdits amplificateurs (124,126) est électriquement connectée à ladite électrode (120) par l'intermédiaire d'un réseau (132,134) d'adaptation d'impédance.

**27.** Laser à lame selon la revendication 1, caractérisé en ce que le laser est mis en fonctionnement de façon à générer un faisceau laser impulsionnel dans lequel chaque impulsion est plus courte qu'une milliseconde et a une énergie par impulsion supérieure à 100 millijoules.

**28.** Laser à lame selon la revendication 27, caractérisé en ce que lesdites impulsions ont une durée d'environ 0,5 milliseconde ou moins.

**29.** Laser à lame selon l'une quelconque des revendications précédentes, caractérisé en ce que ledit laser est un laser à $CO_2$.

FIG. 1

FIG. 2

FIG. 3

FIG. 4

FIG. 5

FIG. 6

FIG. 7

20

**FIG. 9**

**FIG. 13**

**FIG. 8**

**FIG. 11**

**FIG. 10**

**FIG. 12**

21

RADIUS OF CURVATURE VERSES DISTANCE
FROM A 1.9 mm SQUARE WAVEGUIDE

WAVELENGTH = 10.6 MICRONS
BEAM DIAMETER AT END OF
WAVEGUIDE = 0.688 mm

FIG. 14

LIFE TEST OF 60 cm SLAB LASER
OPERATING AT 500 μs PULSES AT 50 % DUTY CYCLE

FIG. 15

AVERAGE POWER PERFORMANCE OF
60 cm SLAB LASER

FIG. 16

PERFORMANCE OF 60 cm SLAB LASER AT
VARIOUS PULSE LENGTHS

FIG. 17

PRESSURE DEPENDENCE OF AVERAGE OUTPUT
POWER FOR 60 cm SLAB LASER

FIG. 18

FIG. 19

**FIG. 20**